# EUROPÄISCHE PATENTSCHRIFT

(11) **EP 1 821 165 B1**
(45) Veröffentlichungstag und Bekanntmachung des Hinweises auf die Patenterteilung: **20.01.2010**
(21) Anmeldenummer: 06003296.8
(22) Anmeldetag: 17.02.2006
(51) Int. Cl.: G05B 19/042

(54) **Nutzung von Variablen in mehreren Automatisierungssystemen**
Use of variables in multiple automation systems
Utilisation de variables dans plusieurs systèmes d'automatisation

(43) Veröffentlichungstag der Anmeldung: 22.08.2007
(73) Patentinhaber: SIEMENS AKTIENGESELLSCHAFT, 80333 München (DE)
(72) Erfinder: Biehler, Georg, 90453 Nürnberg (DE); Füsslein, Wolfgang, 76879 Essingen (DE); Trapp, Lothar, 90537 Feucht (DE)

(56) Entgegenhaltungen:
- US-A1- 2002 016 815
- US-A1- 2003 009 572
- US-A1- 2005 256 894
- US-B1- 6 201 996

## Beschreibung

Die Erfindung betrifft ein Verfahren bzw. ein System zur Nutzung von zumindest einer Variablen eines ersten Automatisierungssystems in einem zweiten Automatisierungssystem, wobei die Variable vom ersten Automatisierungssystem zur Verfügung gestellt wird.

Ein derartiges Verfahren bzw. System kommt insbesondere auf dem Gebiet der Anlagenautomatisierung zum Einsatz, bei dem meistens mehrere Automatisierungssysteme zur Steuerung einer Anlage eingesetzt werden. Ein wichtiger Teilaspekt dabei ist die Nutzung von Variablen eines Automatisierungssystems in einem anderen Automatisierungssystem. Die Variablen, die von anderen Kommunikationspartnern genutzt werden, müssen von dem System, das die Variablen als Original hält, zur Verfügung gestellt werden.

Für den Zugriff - lesend oder auch schreibend - aus einem Automatisierungssystem auf eine Variable eines anderen Automatisierungssystems werden heute prinzipiell unterschiedliche Verfahren eingesetzt. So werden zum Beispiel spezielle Zugriffsfunktionen, wie beispielsweise die Funktionsbausteine nach IEC 61131-5 oder die Systemfunktionen "GET/PUT" der SIMATIC S7 verwendet. Diese Zugriffsfunktionen unterscheiden nach Lesen und Schreiben der Variablen, verlangen die Projektierung einer Verbindung zwischen den beiden Automatisierungssystemen, die dann an den Zugriffsfunktionen angegeben werden muss, oder aber zumindest die Identifikation des Automatisierungssystems, das die Variable beinhaltet. Zusätzlich muss bei den Zugriffsfunktionen der Name oder die Adresse der Variablen angegeben werden, sowie eine lokale Variable eingerichtet und an der Zugriffsfunktion angegeben werden, die den Wert der Variablen aufnehmen soll. Durch den Aufruf der Zugriffsfunktion wird dann die so identifizierte Variable gelesen bzw. geschrieben und der Wert dem Programm zur Verfügung gestellt bzw. von ihm übernommen.

Alternativ ist beispielsweise im System SIMATIC S7 ein tabellengestütztes Verfahren zum Austausch von variablen Werten integriert. Dazu werden die Automatisierungssysteme, die miteinander variable Werte austauschen wollen, in die Tabelle als Spalten übernommen. In den jeweiligen Zeilen werden dann die Identifikationen - Name oder Adresse - der Variablen eingetragen, die denselben Wert haben sollen. Eine Zelle jeder Zeile der Tabelle wird als Sendevariable gekennzeichnet, das heißt der Wert dieser Variablen wird an die anderen Variablen, die in derselben Zeile genannt sind, übertragen.

Aus der US 6,201,996 B1 ist ein Controller bekannt, der mit entfernten Computern interagiert und diesen Computern über eine objektorientierte Kontrollstruktur Zugang zu Daten ermöglicht. Ein Anwender kann dabei über einen Browser auf Basis des TCP/IP-Protokolls mit einer URL-Adresse auf ein Objekt zugreifen, so dass es in dem Browser als Internetseite angezeigt wird. Die Anzeige des Objekts kann über diese Seite vom Anwender verändert werden, z. B. über sogenannte Applets.

Das Dokument US 2002/0016815 A1 beschreibt ein Kommunikationssystem für Automatisierungssysteme zur Kommunikation über ein Netzwerk auf Basis des TCP/IP-Protokolls. Die Automatisierungssysteme umfassen jeweils mindestens ein Anwendungsprogramm und eine HTTP-Schnittstelle. Die Anwendungsprogramme erlauben einen Zugriff und eine Bearbeitung durch einen Programmierer über das Netzwerk, da in den Programmen Server- und Client-Funktionen implementiert sind. Für den Zugriff auf ein entferntes Anwendungsprogramm muss dessen Adresse dem Programmierer bekannt sein.

Diese bestehenden Verfahren sind dadurch gekennzeichnet, dass bei einem Zugriff auf variable Werte eines anderen Automatisierungssystems aus Anwendersicht zusätzliche Methoden verwendet werden müssen, im Vergleich zum Zugriff auf lokale Variable.

Der Erfindung liegt die Aufgabe zugrunde, ein Verfahren, bzw. ein System anzugeben, mit dem der Anwender den Zugriff auf eine lokale Variable und eine Variable eines anderen Automatisierungssystems gleichartig programmieren kann.

Diese Aufgabe wird bei einem Verfahren bzw. einem System der eingangs genannten Art, bei dem zur eindeutigen Identifikation der Variablen im zumindest zweiten Automatisierungssystem ein Identifikationsmerkmal verwendet wird, das hierarchisch aufgebaut ist und einem systemspezifischen Pfadnamen und einen Namen der Variablen aufweist, dadurch gelöst, dass ein Anwender die Variable in einem Programmeditor aus einer Variablenliste auswählt, und der Programmeditor das Identifikationsmerkmal automatisch bildet.

Hierdurch greift der Anwender aus Sicht der Programmierung auf eine Variable eines anderen Automatisierungssystems so zu wie auf eine lokale Variable. Die Programmierung von speziellen Zugriffsfunktionen, das Einrichten von Verbindungen und das Anlegen einer lokalen Variablen zur Aufnahme des variablen Werts bzw. die Erstellung zusätzlicher Zuordnungstabellen und ebenso das Anlegen der lokalen Variablen entfallen.

Die einzelnen Bestandteile des Identifikationsmerkmals werden jeweils durch ein Trennmerkmal voneinander getrennt. Dieses Trennmerkmal kann beispielsweise ein Schrägstrich sein, wodurch die Lesbarkeit des Identifikationsmerkmals erhöht wird.

Der Anwender muss sich nicht darum kümmern, in welchem Automatisierungssystem das Original der Variable vorliegt, da der Programmeditor den systemsspezifischen Pfadnamen automatisch ergänzt.

In einer vorteilhaften Ausführungsform gibt ein Anwender das Identifikationsmerkmal der Variablen direkt in einem Programmeditor an, und dem Anwender werden aktuell immer die Identifikationsmerkmale zur Auswahl angeboten, die mit dem bisher eingegebenen Identifikationsmerkmal übereinstimmen. Diese auch "Autocompletion" genannte Methode stellt eine komfortable Unterstützung des Anwenders bei der Programmierung dar.

In einer weiteren vorteilhaften Ausführungsform wird im zweiten Automatisierungssystem eine Proxy-Variable angelegt, die vom selben Datentyp ist und denselben Wert enthält wie die durch das Identifikationsmerkmal gekennzeichnete Variable des ersten Automatisierungssystems. Die interne Verwendung der lokalen Proxy-Variablen erlaubt den Zugriff auf den variablen Wert so effizient zu gestalten wie einen Zugriff auf eine lokale Variable.

In einer weiteren vorteilhaften Ausführungsform wird die Proxy-Variable zyklisch aktualisiert. Das System stellt diesen zyklisch aktualisierten Wert der entfernten Variable im lokalen Programm zur Verfügung, um nicht während der Bearbeitung des Zugriffs erst die Variable vom entfernten Automatisierungssystem lesen zu müssen.

In einer weiteren vorteilhaften Ausführungsform wird bei einem Fehler bei einem ersten Zugriff des zweiten Automatisierungssystems auf das erste Automatisierungssystem ein Initialwert der Proxy-Variable verwendet, der spezifisch projektiert werden kann. Hierdurch wird sichergestellt, dass das Automatisierungssystem, auch bei einem Zugriffsfehler auf das entfernte Automatisierungssystem, mit einem sinnvollen Startwert der Proxy-Variable weiterarbeiten kann.

In einer weiteren vorteilhaften Ausführungsform wird bei einem Fehler bei einem weiteren als den ersten Zugriff des zweiten Automatisierungssystems auf das erste Automatisierungssystem der letzte Wert der Proxy-Variable als aktueller Wert beibehalten. Hierdurch wird ebenfalls sichergestellt, dass das zweite Automatisierungssystem bei einem Zugriffsfehler auf das erste Automatisierungssystem mit einem sinnvollen Wert der Proxy-Variable weiterarbeiten kann.

In einer weiteren vorteilhaften Ausführungsform wird bei einem Zugriffsfehler des zweiten Automatisierungssystems auf das erste Automatisierungssystem ein Fehlerereignis eines zweiten Automatisierungssystems ausgelöst, durch das in einem Anwenderprogramm spezifische Algorithmen zur adäquaten Reaktion auf den Zugriffsfehler ausgeführt werden. Diese sind zum Beispiel die Anzeige des Zugriffsfehlers, die Auslösung eines Fehlerereignisses oder die Bereitstellung eines von dem zweiten Automatisierungssystem berechneten Ersatzwertes für die Proxy-Variable.

Vom ersten Automatisierungssystem werden alle technisch geeigneten Variablen zur Verfügung gestellt. Hierdurch werden technisch nicht geeignete Variablen ausgeblendet, das heißt es werden zum Beispiel keine temporären Variablen oder Pointer zur Verfügung gestellt. Somit erfolgt eine Konzentration auf das wesentliche, und die Übersichtlichkeit in der Menge der Variablen in einer Anlage ist gewahrt. Des Weiteren trägt die Begrenzung der Variable zur notwendigen Ressourcenschonung bei.

Vom ersten Automatisierungssystem werden außerdem alle Variablen zur Verfügung gestellt, die eine von einem Anwender bestimmte Eigenschaft aufweisen. Beispielsweise werden die Variablen der Parameterschnittstelle vom Funktionsblock (input und/oder output) als solche Variablen angeboten. In einem anderen Beispiel sollen automatisch nur die Variablen zur Verfügung stehen, die bestimmte Eigenschaften, wie die Attribute HMI-(Human Machine Interface-)relevant oder MES-(Manufacturing Execution System-) relevant, besitzen.

In einer weiteren vorteilhaften Ausführungsform wird die Variable des ersten Automatisierungssystems, auf die vom zweiten Automatisierungssystem aus zugegriffen wird, erst aufgrund dieser Anforderung hin zur Verfügung gestellt. Hierdurch besteht für den Anwender die Möglichkeit, gezielt auf eine Variable von einem entfernten Kommunikationspartner zuzugreifen, die bisher noch nicht zur Verfügung gestellt wurde.

In einer weiteren vorteilhaften Form der Ausführung wird die Menge der zur Verfügung gestellten Variablen von einem Anwender begrenzt. In diesem Fall kann ohne Erlaubnis des Erstellers des Anwenderprogramms der Variablen der Variablenumfang nicht erweitert werden. Somit kann der Anwender verhindern, dass Variablen zur Verfügung gestellt werden, die nicht zur Verfügung gestellt werden sollen oder dürfen, da der Anwender bzw. der Hersteller eines Teils der Automatisierungslösung dies nicht will, zum Beispiel um sein Wissen zu schützen.

Im Folgenden wird die Erfindung anhand des in der Figur dargestellten Ausführungsbeispiels näher beschrieben und erläutert. Es zeigt:

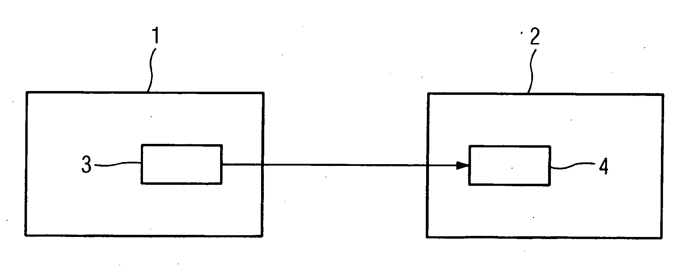

FIG 1 eine schematische Darstellung zweier Automatisierungssysteme, die die gleiche Variable benutzen.

FIG 1 zeigt eine schematische Darstellung eines ersten Automatisierungssystems 1 sowie eines zweiten Automatisierungssystems 2, wobei eine Variable 3 für die Nutzung im zweiten Automatisierungssystem 2 zur Verfügung gestellt wird. Zur einfacheren Nutzung der Variablen 3 im zweiten Automatisierungssystem 2, damit nicht bei jedem Abfragen der Variablen 3 auf das entfernte Automatisierungssystem 1 zugegriffen werden muss, wird im zweiten Automatisierungssystem 2 eine Proxy-Variable 4 eingerichtet. Diese Proxy-Variable 4 wird bei einem Zugriffsfehler des zweiten Automatisierungssystems 2 auf das erste Automatisierungssystem 1 mit einem Initialwert bzw. mit dem letzten aktuellen Wert belegt, je nach dem, ob der Zugriffsfehler bereits beim ersten Zugriff oder erst später erfolgte.

Zusammenfassend betrifft die Erfindung ein Verfahren bzw. ein System zur Nutzung von zumindest einer Variablen eines ersten Automatisierungssystems in zumindest einem zweiten Automatisierungssystem, wobei die Variable vom ersten Automatisierungssystem zur Verfügung gestellt wird. Der Erfindung liegt die Aufgabe zugrunde, einem Anwender zu ermöglichen, den Zugriff auf eine lokale und eine entfernte Variable gleichartig zu programmieren, wobei die Programmierung von speziellen Zugriffsfunktionen, das Einrichten von Verbindungen und das Anlegen einer lokalen Variablen zur Aufnahme des variablen Werts bzw. die Erstellung zusätzlicher Zuordnungstabellen und ebenso das Anlegen der lokalen Variable entfallen. Diese Aufgabe wird bei einem Verfahren bzw. einem System der eingangs genannten Art dadurch gelöst, dass zur eindeutigen Identifikation der Variablen im zumindest zweiten Automatisierungssystem ein Identifikationsmerkmal verwendet wird, das hierarchisch aufgebaut ist und einen systemspezifischen Pfadnamen und einen Namen der Variablen aufweist. Hierdurch muss sich der Anwender um die Aktualisierung der Variablen nicht kümmern, man muss also beispielsweise keine Zugriffsfunktionen aufrufen. Für den Anwender ergeben sich des Weiteren durch dieses Verfahren ein erheblich geringerer Projektierungsaufwand und eine größere Klarheit des Programms, da sofort ersichtlich ist, auf welche Variable zugegriffen wird.

## Patentansprüche

1. Verfahren zur Nutzung von zumindest einer Variablen (3) eines ersten Automatisierungssystems (1) in zumindest einem zweiten Automatisierungssystem (2), wobei die Variable (3) vom ersten Automatisierungssystem (1) zur Verfügung gestellt wird,
wobei zur eindeutigen Identifikation der Variablen (3) im zumindest zweiten Automatisierungssystem (2) ein Identifikationsmerkmal verwendet wird, das hierarchisch aufgebaut ist und einen systemspezifischen Pfadnamen und einen Namen der Variablen (3) aufweist,
**dadurch gekennzeichnet, dass** ein Anwender die Variable (3) in einem Programmeditor aus einer Variablenliste auswählt und der Programmeditor das Identifikationsmerkmal automatisch bildet und
dass vom ersten Automatisierungssystem (1) alle technisch geeigneten Variablen oder alle Variablen, die eine von einem Anwender bestimmte Eigenschaft aufweisen, zur Verfügung gestellt werden.

2. Verfahren nach Anspruch 1,
wobei ein Anwender das Identifikationsmerkmal der Variablen (3) direkt in einen Programmeditor eingibt und dem Anwender aktuell immer die Identifikationsmerkmale zur Auswahl angeboten werden, die mit dem bisher eingegebenen Identifikationsmerkmal übereinstimmen.

3. Verfahren nach einem der vorhergehenden Ansprüche,
wobei im zweiten Automatisierungssystem (2) eine Proxy-Variable (4) angelegt wird, die vom selben Datentyp ist und denselben Wert enthält wie die durch das Identifikationsmerkmal gekennzeichnete Variable (3) des ersten Automatisierungssystems (1).

4. Verfahren nach Anspruch 3,
wobei die Proxy-Variable (4) zyklisch aktualisiert wird.

5. Verfahren nach Anspruch 3 oder 4,
wobei bei einem Fehler bei einem ersten Zugriff des zweiten Automatisierungssystems (2) auf das erste Automatisierungssystem (1) ein Initialwert der Proxy-Variable (4) verwendet wird, der spezifisch projektiert werden kann.

6. Verfahren nach Anspruch 4 oder 5,
wobei bei einem Fehler bei einem weiteren als dem ersten Zugriff des zweiten Automatisierungssystems (2) auf das erste Automatisierungssystem (1) der letzte Wert der Proxy-Variable (4) als aktueller Wert beibehalten wird.

7. Verfahren nach einem der vorhergehenden Ansprüche,
wobei bei einem Zugriffsfehler des zweiten Automatisierungssystems (2) auf das erste Automatisierungssystem (1) ein Fehlerereignis im zweiten Automatisierungssystem (2) ausgelöst wird, durch das in einem Anwenderprogramm spezifische Algorithmen zur adäquaten Reaktion auf den Zugriffsfehler ausgeführt werden.

8. Verfahren nach einem der vorhergehenden Ansprüche,
wobei die Variable (3) des ersten Automatisierungssystems (1), auf die vom zweiten Automatisierungssystem (2) aus zugegriffen wird, erst aufgrund dieser Anforderung hin zur Verfügung gestellt wird.

9. Verfahren nach einem der vorhergehenden Ansprüche,
wobei die Menge der zur Verfügung gestellten Variablen von einem Anwender begrenzt wird.

10. System aus mindestens zwei Automatisierungssystemen (1, 2) mit Mitteln zur Nutzung von zumindest einer Variablen (3) eines ersten Automatisierungssystems (1) in zumindest einem zweiten Automatisierungssystem (2), wobei das erste Automatisierungssystem (1) Mittel zur Bereitstellung der Variablen (3) aufweist,
bei dem zur eindeutigen Identifikation der Variablen (3) im zumindest zweiten Automatisierungssystem (2) ein Identifikationsmerkmal verwendbar ist, das einen hierarchischen Aufbau aus einem systemspezifischen Pfadnamen und einem Namen der Variablen (3) aufweist,
**dadurch gekennzeichnet,**
**dass** das zweite Automatisierungssystem (2) einen Programmeditor aufweist, in dem die Variable (3) von einem Anwender aus einer Variablenliste wählbar ist, wobei der Programmeditor Mittel zur automatischen Bildung des Identifikationsmerkmals der Variablen (3) aufweist und
**dass** das erste Automatisierungssystem (1) Mittel zur Bereitstellung aller technisch geeigneten Variablen oder Mittel zur Bereitstellung aller Variablen mit einer von einem Anwender bestimmten Eigenschaft aufweist.

11. System nach Anspruch 10,
wobei das zweite Automatisierungssystem (2) einen Programmeditor aufweist, in dem das Identifikationsmerkmal der Variablen (3) von einem Anwender direkt eingebbar ist, wobei der Programmeditor Mittel zur aktuellen Anzeige und Auswahl von Identifikationsmerkmalen aufweist, die mit dem bisher vom Anwender eingegebenen übereinstimmen.

12. System nach Anspruch 10 oder 11,
wobei das zweite Automatisierungssystem (2) eine Proxy-Variable (4) vom selben Datentyp und mit demselben Wert wie die durch das Identifikationsmerkmal gekennzeichnete Variable (3) des ersten Automatisierungssystems (1) aufweist.

13. System nach Anspruch 12,
wobei die Proxy-Variable (4) zur zyklischen Aktualisierung vorgesehen ist.

14. System nach Anspruch 12 oder 13,
wobei bei einem Fehler bei einem ersten Zugriff des zweiten Automatisierungssystems (2) auf das erste Automatisierungssystem (1) ein spezifisch projektierbarer Initialwert der Proxy-Variable (4) zur Verwendung vorgesehen ist.

15. System nach Anspruch 13 oder 14,
wobei bei einem Fehler bei einem weiteren als dem ersten Zugriff des zweiten Automatisierungssystems (2) auf das erste Automatisierungssystem (1) der letzte Wert der Proxy-Variable (4) als aktueller Wert zur Verwendung vorgesehen ist.

16. System nach einem der Ansprüche 10 bis 15,
wobei bei einem Zugriffsfehler des zweiten Automatisierungssystems (2) auf das erste Automatisierungssystem (1) ein Fehlerereignis im zweiten Automatisierungssystem (2) auslösbar ist, durch das in einem Anwenderprogramm spezifische Algorithmen zur adäquaten Reaktion auf den Zugriffsfehler ausführbar sind.

17. System nach einem der Ansprüche 10 bis 16,
wobei die Variable (3) des ersten Automatisierungssystems (1) erst aufgrund einer Anforderung des zweiten Automatisierungssystems (2) zur Bereitstellung vorgesehen ist.

18. System nach einem der Ansprüche 10 bis 17,
wobei das erste Automatisierungssystem (1) Mittel zur Begrenzung der Menge der zur Bereitstellung vorgesehenen Variablen aufweist.

## Claims

1. Method for using at least one variable (3) of a first automation system (1) in at least a second automation system (2), with the variable (3) being made available by the first automation system (1),
with an identification feature being used for the unique identification of the variable (3) in the at least second automation system (2), said identification feature being hierarchically structured and having a system-specific path name and a name for the variable (3),
**characterised in that**
a user selects the variable (3) in a program editor from a list of variables and the program editor automatically creates the identification feature and
the first automation system (1) makes available all technically suitable variables or all variables having a characteristic specified by a user.

2. Method according to claim 1,
with a user inputting the identification feature of the variable (3) directly into a program editor and the user always being offered an up to date selection of the identification features, which correspond to the identification feature input to date.

3. Method according to one of the preceding claims,
with a proxy variable (4) being applied in the second automation system (2), being of the same data type and having the same value as the variable (3) of the first automation system (1) identified by the identification feature.

4. Method according to claim 3,
with the proxy variable (4) being cyclically updated.

5. Method according to claim 3 or 4,
with an initial value of the proxy variable (4) being used, which can be configured specifically, if an error occurs during a first access by the second automation system (2) to the first automation system (1).

6. Method according to claim 4 or 5,
with the last value of the proxy variable (4) being retained as the current value, if an error occurs during a further access than the first access by the second automation system (2) to the first automation system (1).

7. Method according to one of the preceding claims,
with an error event in the second automation system (2) being initiated, causing specific algorithms for an adequate response to the access error to be executed in a user program, if an error occurs during access by the second automation system (2) to the first automation system (1).

8. Method according to one of the preceding claims,
with the variable (3) of the first automation system (1), which is accessed from the second automation system (2), only being made available further to this request.

9. Method according to one of the preceding claims,
with the quantity of variables made available being limited by a user.

10. System comprising at least two automation systems (1, 2) with means for using at least one variable (3) of a first automation system (1) in at least a second automation system (2), with the first automation system (1) having means to provide the variable (3),
in which an identification feature can be used for the unique identification of the variable (3) in the at least second automation system (2), said identification feature having a hierarchical structure made up of a system-specific path name and a name for the variable (3)
**characterised in that**
the second automation (2) has a program editor, in which the variable (3) can be selected by a user from a list of variables, with the program editor having means to create the identification feature of the variable (3) automatically and that the first automation system (1) having means to provide all technically suitable variables or means to provide all variables with a characteristic determined by a user

11. System according to claim 10,
with the second automation system (2) having a program editor, in which the identification feature of the variable (3) can be input directly by a user, with the program editor having means for the up to date displaying and selection of identification features, which correspond to the identification feature input to date by the user.

12. System according to claim 10 or 11,
with the second automation system (2) having a proxy variable (4) of the same data type and with the same value as the variable (3) of the first automation systems (1) identified by the identification feature.

13. System according to claim 12,
with the proxy variable (4) being provided for cyclical updating.

14. System according to claim 12 or 13,
with a specifically configurable initial value of the proxy variable (4) being provided for use, if an error occurs during a first access by the second automation systems (2) to the first automation system (1).

15. System according to claim 13 or 14,
with the last value of the proxy variable (4) being provided for use as the current value, if an error occurs during a further access than the first access by the second automation system (2) to the first automation system (1).

16. System according to one of claims 10 to 15,
with an error event in the second automation system (2) being able to be initiated, causing specific algorithms for an adequate response to the access error to be able to be executed in a user program, if an error occurs during access by the second automation system (2) to the first automation system (1).

17. System according to one of claims 10 to 16,
with the variable (3) of the first automation system (1) only being provided further to a request from the second automation system (2) for its provision.

18. System according to one of claims 10 to 17,
with the first automation system (1) having means to limit the quantity of variables provided for provision purposes.

## Revendications

1. Procédé d'utilisation d'au moins une variable ( 3 ) d'un premier système ( 1 ) d'automatisation dans au moins un deuxième système ( 2 ) d'automatisation, la variable ( 3 ) étant mise à disposition par le premier système ( 1 ) d'automatisation,
dans lequel, pour l'identification univoque de la variable ( 3 ) dans le au moins deuxième système ( 2 ) d'automatisation, on utilise une caractéristique d'identification qui est formée de manière hiérarchique et qui a un nom de chemin spécifique au système et un nom de la variable ( 3 ),
**caractérisé en ce qu'**un utilisateur choisit la variable ( 3 ) dans un éditeur de programmes constitué d'une liste de variables et l'éditeur de programmes forme automatiquement la caractéristique d'identification, et
**en ce que** toutes les variables appropriées techniquement ou toutes les variables qui ont une propriété définie par un utilisateur sont mises à disposition par le premier système ( 1 ) d'automatisation.

2. Procédé suivant la revendication 1,
dans lequel un utilisateur entre la caractéristique d'identification de la variable ( 3 ) directement dans un éditeur de programmes et les caractéristiques d'identification pour la sélection qui coïncident avec la caractéristique d'identification entrée jusqu'ici sont toujours offertes instantanément à l'utilisateur pour la sélection.

3. Procédé suivant l'une des revendications précédentes,
dans lequel on met dans le deuxième système ( 2 ) d'automatisation une variable ( 4 ) proxy qui est du même type de données et qui contient les mêmes valeurs que la variable ( 3 ) du système ( 1 ) d'automatisation, qui est **caractérisée par** la caractéristique d'identification.

4. Procédé suivant la revendication 3,
dans lequel on fait une mise à jour cyclique de la variable ( 4 ) proxy.

5. Procédé suivant la revendication 3 ou 4,
dans lequel en cas d'erreur lors d'un premier accès du deuxième système ( 2 ) d'automatisation au premier système ( 1 ) d'automatisation, on utilise une valeur initiale de la variable ( 4 ) proxy qui peut être planifiée spécifiquement.

6. Procédé suivant la revendication 4 ou 5,
dans lequel en cas d'erreur lors d'un accès autre que le premier du deuxième système ( 2 ) d'automatisation au premier système ( 1 ) d'automatisation, on conserve la dernière valeur de la variable ( 4 ) proxy comme valeur de mise à jour.

7. Procédé suivant l'une des revendications précédentes,
dans lequel en cas d'erreur d'accès du deuxième système ( 2 ) d'automatisation au premier système ( 1 ) d'automatisation, on déclenche un évènement d'erreur dans le deuxième système ( 2 ) d'automatisation, événement par lequel on exécute dans un programme utilisateur des algorithmes spécifiques pour une réaction adéquate à l'erreur d'accès.

8. Procédé suivant l'une des revendications précédentes,
dans lequel la variable ( 3 ) du premier système ( 1 ) d'automatisation à laquelle on accède par le deuxième système ( 2 ) d'automatisation n'est mise à disposition que sur la base de cette demande.

9. Procédé suivant l'une des revendications précédentes,
dans lequel la quantité des variables mises à disposition est limitée par un utilisateur.

10. Système constitué d'au moins deux systèmes ( 1, 2 ) d'automatisation ayant des moyens d'utilisation d'au moins une variable ( 3 ) d'un premier système ( 1 ) d'automatisation dans au moins un deuxième système ( 2 ) d'automatisation, le premier système ( 1 ) d'automatisation ayant des moyens de mise à disposition des variables ( 3 ),
dans lequel pour l'identification univoque des variables ( 3 ) dans au moins un deuxième système ( 2 ) d'automatisation, on peut utiliser une caractéristique d'identification qui a une structure hiérarchique constituée d'un nom de chemin spécifique au système et d'un nom d'une variable ( 3 ),
**caractérisé**
**en ce que** le deuxième système ( 2 ) d'automatisation à un éditeur de programmes dans lequel la variable ( 3 ) peut être choisie par un utilisateur dans une liste variable, l'éditeur de programmes ayant des moyens de formation automatiques d'une caractéristique d'identification des variables ( 3 ), et
**en ce que** le premier système ( 1 ) d'automatisation à des moyens de mise à disposition de toutes les variables appropriées techniquement ou des moyens de mise à disposition de toutes les variables ayant une propriété définie par un utilisateur.

11. Système suivant la revendication 10,
dans lequel le deuxième système ( 2 ) d'automatisation a un éditeur de programmes dans lequel, la caractéristique d'identification de variables ( 3 ) est transmise directement par un utilisateur, l'éditeur de programmes ayant un moyen d'affichage instantanée et de sélection de caractéristiques d'identification, qui coïncident avec celui entré jusqu'ici par l'utilisateur.

12. Système suivant la revendication 10 ou 11,
dans lequel le deuxième système ( 2 ) d'automatisation a une variable ( 4 ) proxy de la variable ( 3 ) du premier système ( 1 ) d'automatisation, qui est **caractérisée par** la caractéristique d'identification.

13. Système suivant la revendication 12,
dans lequel la variable ( 4 ) proxy est prévue pour la mise à jour cyclique.

14. Système suivant la revendication 12 ou 13,
dans lequel dans le cas d'une erreur lors d'un premier accès du deuxième système ( 2 ) d'automatisation au premier système ( 1 ) d'automatisation, une valeur initiale pouvant être planifiée spécifiquement de la variable ( 4 ) proxy est prévue en vue d'être utilisée.

15. Système suivant la revendication 13 ou 14,
dans lequel dans le cas d'une erreur lors d'un accès autre que le premier accès du deuxième système ( 2 ) d'automatisation au premier système ( 1 ) d'automatisation, la dernière valeur de la variable ( 4 ) proxy est prévue comme valeur de mise à jour pour l'utilisation.

16. Système suivant l'une des revendications 10 à 15,
dans lequel dans le cas d'un erreur d'accès du deuxième système ( 2 ) d'automatisation au premier système ( 1 ) d'automatisation, un événement d'erreur peut être déclenché dans le deuxième système ( 2 ) d'automatisation, événement par lequel des algorithmes spécifiques dans un programme d'utilisateur peuvent être exécutés pour réagir de manière adéquate à l'erreur d'accès.

17. Système suivant l'une des revendications 10 à 16,
dans lequel la variable ( 3 ) du premier système ( 1 ) d'automatisation n'est prévue pour la mise à disposition que sur la base d'une demande du deuxième système ( 2 ) d'automatisation.

18. Système suivant l'une des revendications 10 à 17,
dans lequel le premier système ( 1 ) d'automatisation à des moyens de limitation de la quantité de variables prévue pour la mise à disposition.
